Europäisches Patentamt

(19) European Patent Office

Office européen des brevets

(11) Publication number : **0 437 345 A2**

# EUROPEAN PATENT APPLICATION

(21) Application number : 91300140.0

(51) Int. Cl.⁵ : **B29C 33/56**

(22) Date of filing : 09.01.91

(30) Priority : 10.01.90 JP 3824/90

(43) Date of publication of application :
17.07.91 Bulletin 91/29

(84) Designated Contracting States :
AT BE CH DE FR GB IT LI NL

(71) Applicant : TAIYO MANUFACTURING WORKS
CO., LTD.
1-2-27, Morishoji, Asahi-ku
Osaka-shi, Osaka 535 (JP)

(72) Inventor : Iwami, Hiroyuki
5-14-3-812, Nakano-cho, Miyakojima-ku
Osaka-shi, Osaka (JP)
Inventor : Sekimoto, Tatsuya
6-5-18, Minamishinmachi
Matsubara-shi, Osaka (JP)
Inventor : Yoshimoto, Yukifumi
5-24-2, Tsukaguchi-cho
Amagasaki-shi, Hyogo-ken (JP)
Inventor : Fukuoka, Masayoshi
12-17, Higashiohgi, Kawaguchi
Yawata-shi, Kyoto (JP)

(74) Representative : Silverman, Warren et al
HASELTINE LAKE & CO. Hazlitt House 28
Southampton Buildings Chancery Lane
London WC2A 1AT (GB)

(54) Mold used for fabricating thermoplastic resin articles.

(57) A mold used for fabricating thermoplastic
resin articles which includes a cavity at least
partly coated with a film having a thickness of
from 0.1 μm to 50 μm and a thermal conductivity
of not more than 0.05 cal/cm·sec·°C.

EP 0 437 345 A2

# MOLD USED FOR FABRICATING THERMOPLASTIC RESIN ARTICLES

The present invention relates to a mold used for fabricating thermoplastic resin articles, and more particularly to a mold used for injection molding or for blow molding, whereby the pattern in the mold is transferred to the article without the possibility of blurring the pattern and with the maintenance of luster and intricacy to the articles.

The known molds used in fabricating articles of thermoplastic resins are made of metals such as common steel, stainless steel, nickel, aluminum alloy, and copper alloy. In order to produce a patterned article, the desired pattern is impressed in a mold, that is, on the inside surface of the cavity, and a molten resin is introduced into the cavity under pressure so as to transfer the pattern from the mold to the article without losing the mirror-like lustrous and intricate tone possessed by the impressed pattern.

A metal mold, however, is disadvantageous in that the pattern in the metal mold is difficult to be transferred to the article without blurring or losing its original luster and intricacy. If such blurring occurs in the pattern transferred to the articles, the appearance of the article is spoiled, and its commercial value is lost. In addition, weld marks and/or flow marks are likely to remain on the articles. These undesirable results are derived from good thermal conductivity of the metal mold. More specifically, when a molten resin is introduced into a cold mold, and comes into contact with the inside surface of the cavity, solidification takes place on a surface layer of the molten resin. In addition, because of low internal pressure in the cavity during the injection process, the solidification gradually spreads in the molten resin prior to the completion of filling, thereby preventing the molten resin from coming into full contact with every intricate part of the pattern in the cavity. In addition, the flow of the molten resin is disturbed around the gate of the mold, thereby preventing a smooth and consistent flow of the molten resin. In this way the solidification of the molten resin goes on, so that even when a high pressure is given to the molten resin confined in the cavity, the pattern of the mold cannot be transferred to articles without losing its original intricacy and tone. This produces articles covered with blurred patterns, and in addition, weld marks and/or flow marks are allowed to remain on the articles.

In order to solve the problem of improper transfer of the pattern to the article, at least two methods can be taken singly or jointly. The first method is to apply strong pressure to the surface of the molten resin so as to secure a clear impression of the pattern on the molten resin. To achieve this method, the molten resin must be injected into the cavity under considerably high pressure. This method requires a large-size injection machine having a highly sophisticated mechanism designed to avoid the production of flashes and warping in the molded articles. In addition, a thick mold enough to withstand the high pressure is required. As a result, the production cost is increased, and the quality of articles is decreased owing to remaining internal stresses due to the high filling pressure.

The second method is to maintain the mold at 80°C, preferably at 90°C or more, so as to delay the solidification on the surface layer of the molten resin. The unsolidified resin is soft and flexible so that it easily comes into contact with every intricate part of the pattern in the inside surface of the cavity immediately after the completion of filling. However, once the mold is heated to such a high temperature, it takes a long time to cool it to a low temperature at which the molten resin solidifies in the cavity, thereby resulting in an extremely prolonged molding process.

The same problem arises when thermoplastic resin is molded by blowing where a parison of a molten resin is brought between the halved molds and nipped therebetween. Then compressed air is introduced into the parison so as to inflate it. The inflated parison is kept in contact with the inside surface of the cavity during the cooling process. The mold used in a blow molding is also made of metals having a good thermal conductivity, thereby causing the same problems as pointed out with respect to molds used in the injection molding. More specifically, the pressure at which the molten resin is introduced into the parison is commonly low, thereby causing the parison to become solidified on its surface layer before the parison comes into contact with the inside surface of the cavity. Thus, the parison has difficulty in following the pattern in the mold, thereby resulting in the transfer of a blurred pattern to the molded article.

Japanese Laid-Open Patent Publication No. 56-115236 discloses a mold made of aluminum alloy having a cavity whose inside surface is anode oxidized to a thickness of about 200 μm. The disclosed mold is designed to improve the surface hardness of aluminum alloy molds but not to solve the problem of blurred patterns transferred from the mold to the articles. As is generally known, an anode oxidized alumina layer is porous in its surface, thereby failing to achieve the mirror-like smooth surface of the mold. As a result, the appearance of the articles is spoiled. The resulting articles lose their commercial value.

The mold of this invention, which overcomes the above-discussed and numerous other disadvantages and deficiencies of the prior art, comprises a cavity at least partly coated with a thin film having a thickness of from 0.1 μm to 50 μm and a thermal conductivity of not more than 0.05 cal/cm·sec·°C. Hereinafter, the thin film is referred to as the film.

In a preferred embodiment, the film is made of a substance selected from metal oxides, silicon oxides, or silicon-base composite oxides.

In a preferred embodiment, the film is made of plastics.

In a preferred embodiment, the film is formed in the cavity.

In a preferred embodiment, the film is formed both in the cavity and the core portion.

Preferably, the film can be made of metal oxides, such as titanium oxide, yttrium oxide, zirconium oxide, silicon-base composite oxides, such as silicon oxide and glass, and plasma polymerized or electrodeposited plastics. The film can be made in the cavity of the mold, and preferably, both in the cavity and the core of the mold.

The film is as thin as 0.1 μm to 50 μm so that it is unlikely to damage the pattern in the mold. In addition, the film quickly releases heat so that it does not take a long time to cool the molten resin. When an oxidized film is used, which has good wettability with a molten resin, provided that the contact angle with water is not larger than 30°, the contact between the film and the molten resin will increase so that the pattern in the mold can be transferred to the articles without losing its original mirror-like smoothness and tone at a relative low pressure.

Thus, the invention described herein makes possible the objectives of (1) providing a mold capable of securing effective wettability and contact between the inside surface of the cavity and the molten resin, thereby enabling a pattern in the mold to transfer to the article without losing its original intricacy and tone under a relatively low pressure, (2) providing a mold capable of avoiding the formation of weld marks or flow marks on the article, (3) providing a mold capable of producing articles with clear and lustrous patterns, and (4) providing a mold capable of quickly cooling, thereby shortening a time for the injection molding process.

The present invention may be better understood, and its numerous objects and advantages will become apparent to those skilled in the art by way of examples given below :

## Example 1

A mold of aluminum having a planar cavity was prepared, and the whole inside surface of the cavity was made lustrous. The half of the whole inside surface of the cavity was coated 0.3 μm thick with silicon dioxide ($SiO_2$) having a thermal conductivity of 0.02 cal/cm·sec·°C (coated area), and no coating was applied to the other half (non-coated area). Acrylonitrile-butadiene-styrene copolymer resin (ABS resin) was heated to 220°C into a molten state, and injected into the cavity of the mold heated to 60°C. In this way an ABS resin plate was produced. Thermocouples were placed in the coated area and the non-coated area so as to measure their surface temperatures that were reached when the molten ABS resin was introduced into the cavity. The surface temperature on the coated area immediately reached 133°C when the molten ABS resin was introduced, but that on the non-coated area reached 85°C. It was found that the portion of the resulting article which was kept in contact with the coated area was more lustrous and had a better transfer of the pattern than the one kept in contact with the non-coated area.

## Example 2

By using a mold of common steel, an ABS resin plate was produced by taking the same procedures as those in Example 1. Likewise, thermocouples indicated that the surface temperature on the coated area immediately reached 137°C when the molten ABS resin was introduced, but that on the non-coated area reached 86°C. It was found that the resulting article had the same result as that achieved in Example 1.

## Example 3

A mold of aluminum having a planar cavity was prepared, and the whole inside surface of the cavity was made lustrous in the same manner as Example 1. The half of the whole inside surface of the cavity was coated to a thickness of 0.3 μm with titanium dioxide ($TiO_2$) having a thermal conductivity of 0.02 cal/cm·sec·°C (coated area), and no coating was applied to the other half (non-coated area). In this way an ABS resin plate was produced. Thermocouples indicated that the surface temperature on the coated area immediately reached 136°C when the molten ABS resin was introduced, but that on the non-coated area reached 84°C. It was found that the portion of the resulting article which was kept in contact with the coated area was more lustrous and had a better transfer of the pattern than that kept in contact with the non-coated area.

## Example 4

By using a mold of common steel, an ABS resin plate was produced by taking the same procedures as those in Example 3. Thermocouples indicated that the surface temperature on the coated area immediately reached 140°C when the molten ABS resin was introduced, but that on the non-coated area reached 86°C. It was found that the portion of the resulting article which was kept in contact with the coated area was more lustrous and had a better transfer of the pattern than that kept in contact with the non-coated area.

Example 5

A mold of aluminum having a planar cavity was prepared, and the whole inside surface of the cavity was made lustrous in the same manner as Example 1. The half of the whole inside surface of the cavity was coated to a thickness of 0.3 μm with yttrium oxide (Y₂O₃)(coated area), and no coating was applied to the other half (non-coated area). In this way an ABS resin plate was produced. Thermocouples indicated that the surface temperature on the coated area immediately reached 147°C when the molten ABS resin was introduced, but that on the non-coated area reached 83°C. It was found that the portion of the resulting article which was kept in contact with the coated area was more lustrous and had a better transfer of the pattern than that kept in contact with the non-coated area.

Example 6

By using a mold of common steel, an ABS resin plate was produced by taking the same procedures as those in Example 5. Thermocouples indicated that the surface temperature on the coated area immediately reached 152°C when the molten ABS resin was introduced, but that on the non-coated area reached 85°C. It was found that the portion of the resulting article which was kept in contact with the coated area was more lustrous and had a better transfer of the pattern than that kept in contact with the non-coated area.

Example 7

A mold of aluminum having a planar cavity was prepared, and the whole inside surface of the cavity was made lustrous in the same manner as Example 1. The half of the whole inside surface of the cavity was coated to a thickness of 0.3 μm with zirconium oxide (ZrO₂) having a thermal conductivity of 0.0064 cal/cm·sec·°C (coated area), and no coating was applied to the other half (non-coated area). In this way an ABS resin plate was produced. Thermocouples indicated that the surface temperature on the coated area immediately reached 157°C when the molten ABS resin was introduced, but that on the non-coated area reached 83°C. It was found that the portion of the resulting article which was kept in contact with the coated area was more lustrous and had a better transfer of the pattern than that kept in contact with the non-coated area.

Example 8

By using a mold of common steel, an ABS resin plate was produced by taking the same procedures as those in Example 7. Thermocouples indicated that the surface temperature on the coated area immediately reached 162°C when the molten ABS resin was introduced, but that on the non-coated area reached 85°C. It was found that the portion of the resulting article which was kept in contact with the coated area was more lustrous and had a better transfer of the pattern than that kept in contact with the non-coated area.

Example 9

By using a mold of copper alloy, an ABS resin plate was produced by taking the same procedures as those in Exemple 7. Thermocouples indicated that the surface temperature on the coated area immediately reached 126°C when the molten ABS resin was introduced, but that on the non-coated area reached 79°C. It was found that the portion of the resulting article which was kept in contact with the coated area was more lustrous and had a better transfer of the pattern than that kept in contact with the non-coated area.

According to the present invention, the surface of the cavity is at least partly coated with a film having a relatively low thermal conductivity, so that the film is immediately heated to such a temperature at which the surface temperature of the molten resin is prevented from falling to a point inappropriate for carrying out the molding. This ensures the effective wettability and contact between the surface of the cavity and the molten resin, thereby enabling a pattern in the mold to transfer to the article without losing its original intricacy and tone at a relatively low pressure. Since the film is quickly heated, the molten resin can flow in an instant without cooling, thereby avoiding the formation of weld marks or flow marks on the article. The film is as thin as 0.1 μm to 50 μm so that the pattern is transferred to the article without blurring problems. In addition, the film quickly releases heat so that it does not take a long time to cool the molten resin.

If a low foaming molding process is carried out, a thin molding having a foamed portion in the center, and a smooth surface can be produced under the condition of lower injection pressure.

Claims

1. A mold used for fabricating thermoplastic resin articles comprising a cavity at least partly coated with a film having a thickness of from 0.1 μm to 50 μm and a thermal conductivity of not more than 0.05 cal/cm.sec.°C.

2. A mold as claimed in claim 1, wherein the film is made of metal oxides, silicon oxides, or silicon-base composite oxides.

3. A mold as claimed in claim 1, wherein the film is made of plastics.

4. A mold as claimed in claim 1, 2 or 3, wherein the film is formed in the cavity.

5. A mold as claimed in claim 1, 2, 3 or 4, wherein the film is formed both in the cavity and the core portion.